# EUROPEAN PATENT SPECIFICATION

(11) **EP 1 254 458 B1**
(45) Date of publication and mention of the grant of the patent: **20.07.2005**
(21) Application number: 01903721.7
(22) Date of filing: 08.02.2001
(51) Int. Cl.: G11B 33/04, G11B 17/30, G11B 17/04

(54) **CONTAINER FOR OPTICAL DISKS, TRAY AND MAGAZINE TYPE PLAYER THEREFOR**
BEHÄLTER FÜR OPTISCHE PLATTEN , PLATTENTELLER UND PLATTENSPIELER VOM MAGAZINTYP
COFFRET A DISQUES OPTIQUES, TIRROIR ET LECTEUR A CHARGEUR A CET EFFET

(30) Priority: 08.02.2000 WO PCT/EP00/00988
(43) Date of publication of application: 06.11.2002
(73) Proprietor: Thomson Licensing S.A., 92100 Boulogne-Billancourt (FR)
(72) Inventor: WEISSER, Fritz, 78112 St. Georgen (DE); PLATTE, Hans-Joachim, 30966 Hemmingen (DE); SCHEFFLER, Wilfried, 78166 Donaueschingen (DE); BEYERS, Billy, Wesley, Carmel, IN 46033 (US)
(74) Representative: Thies, Stephan
(86) International application number: PCT/EP2001/001391
(87) International publication number: WO 2001/059787

(56) References cited:
- EP-A- 0 702 365
- EP-A- 0 717 405
- EP-A- 0 833 327
- EP-A- 0 833 332
- EP-A- 0 866 452
- DE-A- 19 758 211
- US-A- 4 768 116
- US-A- 5 127 716
- US-A- 5 366 073
- US-A- 5 563 855
- US-A- 5 818 802
- US-A- 5 936 935
- US-A- 5 975 291
- US-A- 6 031 811
- PATENT ABSTRACTS OF JAPAN vol. 018, no. 665 (P-1844), 15 December 1994 (1994-12-15) -& JP 06 259914 A (ALPINE ELECTRON INC), 16 September 1994 (1994-09-16)
- PATENT ABSTRACTS OF JAPAN vol. 018, no. 379 (P-1771), 15 July 1994 (1994-07-15) -& JP 06 103672 A (PIONEER ELECTRON CORP), 15 April 1994 (1994-04-15)
- PATENT ABSTRACTS OF JAPAN vol. 1998, no. 06, 30 April 1998 (1998-04-30) -& JP 10 031856 A (AKAI ELECTRIC CO LTD), 3 February 1998 (1998-02-03)

## Description

The invention refers to a container for optical disks, a tray for such container and a magazine type player adapted to be used with such container.

Containers for optical disks are known e.g. from US-A-5,936,935, EP-A-0 833 332, US-A-5,975,291, DE-A-197 58 211 or US-A-5,366,073. For stability reasons all of these known containers either have sum of bottom plate thickness and cover plate thickness larger than thickness of a single tray or, in case of a tray being largely removeable from the container, the tray thickness is larger than the sum of bottom and cover plate thicknesses.

Object of the invention is to provide a container for optical disks in which many disks may be stored within a comparatively small space.

A container for optical disks according to the invention is defined by the features of claim 1.

Other aspects of the invention are defined by the dependent claims.

The outer dimensions of the container according to the invention substantially equal those of a standard Jewel box or a standard DVD storage box. The container height is thus about 10mm, its depth is about 125mm and its width is about 142mm. Each tray has a height of about 2.5mm while the sum of thicknesses of bottom and cover plate is also about 2.5mm. This has the advantage, that it fits to existing storage means, and that no compatibility problems occur.

A Container according to the invention is open at one side for insertion and removal of a tray and it is partially closed at the opposite side. This has the advantage that the mechanical stability of the container is increased in comparison to a container having two opposing open sides. On the other hand, the partial opening is advantageously used to push out a tray, either manually or automatically, to check content of filling state of the tray etc.

Preferably, the container according to the invention comprises releasable locking means for locking the trays in their position within the container. Transportation or other handling of the container is thus possible without the risk of unintentional opening and of loosing a disk.

Preferably the container comprises at least one orientation groove. This enables correct orientation in relation to a playback device and prevents unintentional wrong insertion.

Preferably the orientation groove is arranged near an edge of the container. This makes possible to access to a part of the tray via the orientation groove, e.g. for pushing or pulling out the tray or for checking whether a tray is inserted or not.

According to a preferred solution the container is provided with an identification area. This enables quick identification of the container and its content.

The container according to the invention preferably comprises a read-write protection means. This enables the user to select, in case of writable disks, which disk should be write protected.

The container according to the invention is, in top view, of rectangular shape, having first and second base lines. The first base line is shorter than the second base line and the first base line is less than 5% larger than the diameter of the largest optical disk to be stored within the container. The second base line is less than 20% larger than the diameter of the largest optical disk to be stored within the container. The container is provided with side walls being arranged at the outer ends of the second base line and extending in direction of the first base line. The container further is provided with openings being arranged between the side walls and extending along the second base line, said openings being closed by side surfaces of trays which are accommodated within the container, said side surfaces of said trays, and surfaces of side walls and end surfaces of bottom plate and cover plate forming a substantially even plane.

The container according to the invention is provided with a first locking means which is arranged to lock and unlock all of the trays stored within the container, and with second locking means for locking and releasing each single tray independently of the other trays. This has the advantage, that, in case that the user wants to access to the trays, a certain tray to be accessed to can be defined and unlocked accordingly. For safety reasons, first and second locking means need to be actuated at the same time in order to release a tray. This prevents unintentional release of a tray by actuating one of the locking means by chance.

A tray for a container for optical disks according to the invention has a thickness of substantially the sum of container cover plate and bottom plate thicknesses and comprises gripping holes, support areas for supporting an optical disk at the lower surface of its outer rim, an opening in said support area for enabling access up to the radially outwardly area of an optical disk, the upper surface of said support area rising in cross sectional view from its radially inner end to its radially outer end, guiding means for guiding the tray within the container and an orientation hole. The guiding means are arranged in asymmetric way in order to form a fail-safe means for the orientation of the tray when being input into the container. The guiding means are, according to a preferred solution, projections, which cooperate with guide rails of the side walls of the container. The orientation or centering hole is similar to the one provided by the DVD-RAM standard or another standard for correct orientation of the tray within a scanning device.

A tray for a container for optical disks according to the invention comprises a support area for supporting an optical disk at the lower surface of its outer rim and a releasable disk holder for holding an optical disk at the upper surface of its outer rim. This has the advantage that the disk is kept at the tray even if the tray is taken out of the magazine in an upside down manner. Without a disk holder a user has to handle carefully when removing a tray from the container in order to prevent the disk from falling off the tray. Orientation of tray, be it horizontally, upside down, vertically or any other orientation, is now possible without the risk of the disk falling off when a tray is remove from or inserted into the container. The support area may of course also support the disk at its upper surface while its lower surface is held by the disk holder. A single holder is sufficient to hold the disk sufficiently. However, at least two disk holders are preferred as these might be made smaller and of less stable or strong material, thus being cheaper to produce. A preferred solution is to provide four disk holders arranged in the area of the four edges of a rectangularly shaped tray in order to keep stability of tray and disk holder as large as possible.

An adapter for a tray of a disk storage container according to the invention comprises an outer shape to fit in said tray, gripping holes and an inner support area for supporting an optical disk at the lower surface of its outer rim, an outer support area for being supported by a support area of said tray. The upper surface of said inner support area rises in cross sectional view from its radially inner end to its radially outer end. An opening within said support area is enabling access to the radially outwardly area of a disk, the adapter being asymmetric. The asymmetric shape of the adapter prevents an unintentional wrong oriented insertion of the adapter into a tray. The adapter provides for a small diameter disk being stored in the container.

An adapter according to the invention preferably comprises a disk holder as described above.

A magazine type player and/or recorder according to the invention comprises an optical pick-up unit, a magazine tray for accommodating at least one container, the magazine tray having an orientation rib, a slider for removing a single tray out of said container and for moving said tray into a tray receiving portion of said optical pick-up unit, said slider and optical pick-up unit forming a single vertically movable unit. This has the advantage, that containers according to the invention can be used and that, because of their small size, a large capacity magazine type device is formed the size of which is very small.

Further advantages can be seen from the figures and the following description of preferred embodiments. The invention, however, is not restricted to these embodiments. Measures within the range of a skilled person are also covered by the invention.
- Fig. 1:: perspective view of an inventive container;
- Fig. 1A: Cross sectional view of a part of a container;
- Fig. 2:: perspective view of partly opened container;
- Fig. 3:: adapter and tray according to the invention;
- Fig. 4:: bottom view of inventive container;
- Fig. 5:: top view of inventive container;
- Fig. 6:: large container according to the invention;
- Fig. 7:: magazine type player according to the invention;
- Fig. 8:: magazine type player loaded with a cartridge;
- Fig. 9:: magazine type player loaded with tray;
- Fig. 10:: magazine type player in container changing position;
- Fig. 11:: magazine type player having two optical pick-up units;
- Fig. 12:: tray accessing mechanism of a magazine player;
- Fig. 13:: tray accessing mechanism in tray releasing process;
- Fig. 14:: tray accessing mechanism in released tray position;
- Fig. 15:: different type of tray;
- Fig. 16:: different type of pushing element;
- Fig. 17:: magazine type player according to the invention;
- Fig. 18:: different type of container;
- Fig. 19:: tray with disk holder, unreleased;
- Fig. 20:: tray with disk holder in holding position;
- Fig. 21:: tray with disk holder, released;
- Fig. 22:: tray for small diameter disk;
- Fig. 23:: tray with adapter for small diameter disk;
- Fig. 24:: tray with swinging type disk holder;
- Fig. 25:: tray with different type swinging disk holder.

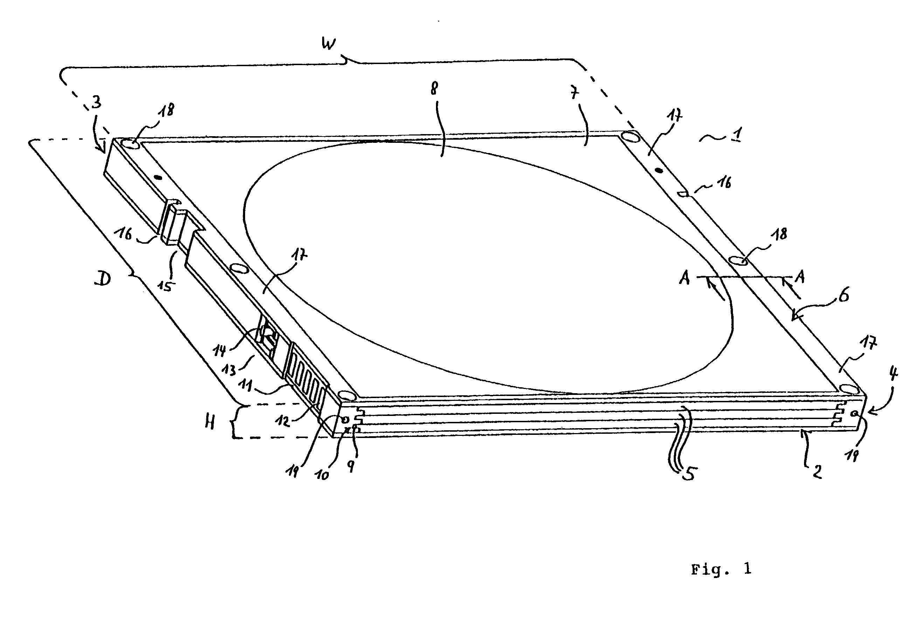

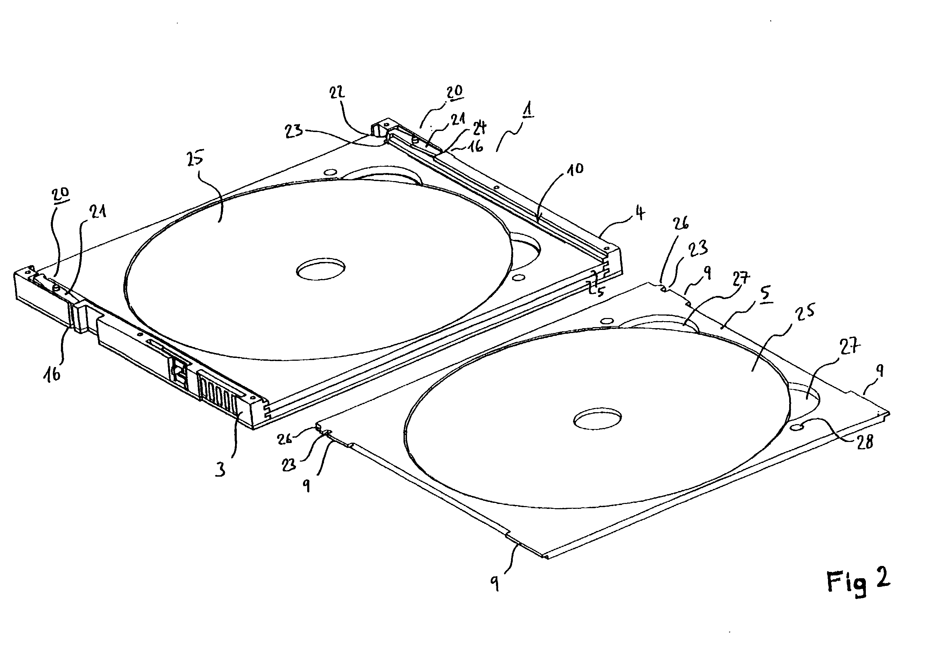

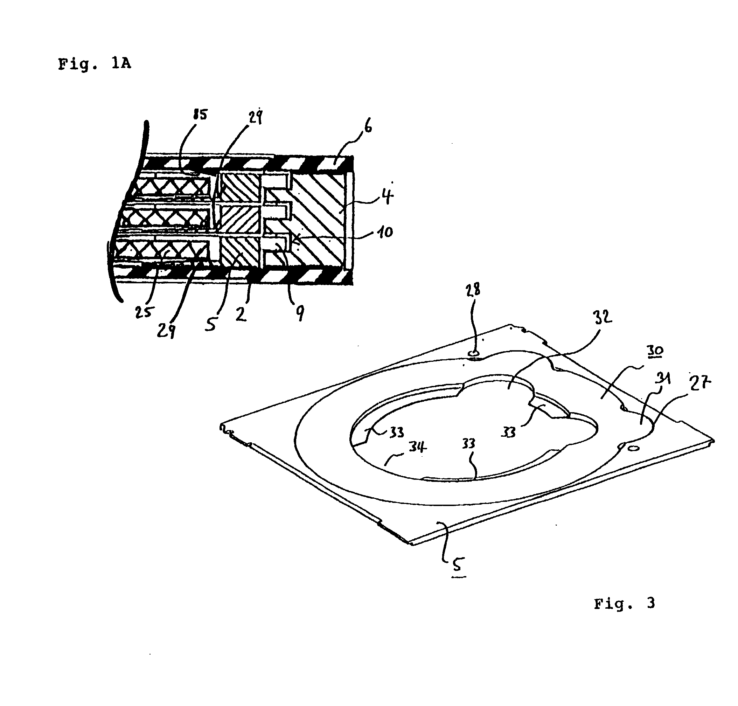

Fig. 1 shows a perspective view of a container 1 according to the invention. The container consists of a bottom plate 2, side walls 3, 4 between which trays 5 are arranged and a cover plate 6. The cover plate 6 is provided at its upper, outer surface with a rectangular depression 7 in which a circular, transparent window 8 is arranged. Preferably, the transparent window 8 consists of the same material as the rectangular depression 7, wherein just the surface of the window 8 is smooth while the surface of the depression 7 is rough, so that transparency or intransparency is reached. Through the transparent window 8 it is easy to check the content of the upper one of trays 5.

The height H of the container 1 of Fig. 1 is much smaller than its depth D and its width W, both defining a first base line D and a second base line W of a rectangle being given by the dimensions of bottom plate 2 or cover plate 6. In the embodiment of Fig. 1 the dimensions of height H equals H=10mm, depth D equals D=125mm and width W equals W=142mm. These dimensions are identical with those of a usual optical disk container, also called Jewel box. However, the container 1 according to the invention is able to store up to three disks 25 instead of a single one according to the usual container. As can be seen at the front side of container 1, the height of bottom plate 2 and cover plate 6 is half the size of each of the trays 5. That means, if two identical containers 1 are stacked one upon the other the difference between two trays 5 is always an integer multiple of the height of one tray 5, as the height of neighbouring bottom plate 2 and cover plate 6 add together to the height of one tray 5. As can be seen further the front sides of the trays 5 are plane and form together with the respective front sides of bottom plate 2, cover plate 6 and side walls 3, 5 a substantially plane front surface.

The trays 5 are provided with projections 9 at the upper end and being guided in guide grooves 10 of the side walls 3, 4. At the left side of the container 1, at side wall 3 there is arranged an identification area 11 which, in the Figure, comprises several electrical contacts 12. Instead of electrical contacts, it is also possible to arrange for optically accessible markings as for example a bar code or other contactless identification means. There is further provided read-write protection means 13, consisting of three dip-switches 14 for manually setting a read or write protection for each of the trays 5. Side wall 3 is further provided with an orientation groove 15 which has no counterpart at the other side and which is arrange asymmetrically, so that correct orientation of the container 1 can be assured by use of orientation groove 15. A release groove 16, which is also present at side wall 4, can be accessed in order to release one or several of the trays 5 to be able to be slit out of the container 1. Support areas 17, at which the height H is controlled to be very close to defined values are indicated, however, not visible in the scale used. There are three support areas 17 in order not to create indefiniteness. The container 1 is further provided with connector openings 18 to which connecting means may be attached in order to connect two or more containers 1 together to a single part.

Orientation grooves 19 are arranged at the height of the middle tray 5 at the front edge of the side walls 3 and 4. These orientation grooves 19 may be used in order to assure correct orientation of container 1 relative to a replay device.

Fig. 2 shows a perspective view of a partly opened container 1. Same parts are indicated with same reference numbers throughout the application and are referred to only in case of different function or additional information. The cover plate 6 is removed in Fig. 2 (not shown) as well as the top one of trays 5 which is shown separately. Guide grooves 10 are visible now more clearly.

At the far end of side walls 3, 4 there are arranged releasable locking means 20. They consist of pivotable levers 21 having a first nose 22 to cooperate with a respective hole 23 of the tray 5 and a second nose being accessible at the release groove 16 from the outside. In the Figure, there is shown a single lever 21 in side wall 4 for releasing or locking all three trays 5 at the same time. At the other side wall 3, there are three levers 21 stacked one over another, so that by selecting one of these levers 21 a special tray to be released can be selected. Both visible trays are filled with an optical recording medium 25. The separated tray 5 shows clearly projections 9 and hole 23 to be guided in guide grooves 10. The projections 9 having holes 23 are provided with a rising edge 26 in order to move levers 21 when the tray 5 is inserted into its locked position. Gripping holes 27 are arranged within the tray 5 in order to be able to access the disk 25 by means of the fingers of a human hand. Orientation holes 28 are provided in the tray 5 in order to assure exact positioning of the tray 5 in a playback device.

Fig. 1A shows a partly cross sectional view along line AA of Fig. 1. On the bottom plate 2 there is arranged at the right hand side a side wall 4 having guiding grooves 10. Within the guiding grooves 10 projections 9 of the trays 5 are guided. The projections 9 are arranged at the upper part of trays 5 and extend outwardly. At the lower part of the trays 5 there are arranged support areas 29 extending radially inwardly with respect to a circular depression of the tray 5. The circular depression accommodates the disk 25. As can be seen, the thickness of the support areas 29 is very small and reduces in radially inwardly direction. This ensures, that the optical recording medium 25 is supported only at its outer edge. Preferably the support areas 29 are provided with a slope at their upper surface as well as on their lower surface. This has the advantage that even in case that the container is turned upside down, the disk 25 housed in a tray 5 is supported by the neighbouring tray 5 at the sloped lower surface of its support areas 29. Similarly the inner part of cover plate 6 is provided with a sloped circular area 85 which is shown in Fig. 1A in an exaggerated manner. This sloped circular area 85 has also a disk supporting function in case of the container 1 being turned upside down.

Fig. 3 shows an adapter and a tray according to the invention. Within tray 5 there is arranged an adapter 30. Its outer surface is formed such that it exactly fits in the opening of the tray 5, including gripping holes 27. For this reason the adapter 30 is provided with radially outwardly extending noses 31. In its radially inward part there are also arranged gripping holes 32 and, at its lower end, support areas 33 which also are reduced in thickness from their radially outwardly end to their inner end. The support areas 33 do not form a complete circle. There is arranged an opening 34 for making possible access from the downside through opening 34 to the radially outwardly area of a disk 25 accommodated on the support areas 33. A similar opening is also arranged in the support area 29 of tray 5, which is not visible here. The adapter 30 is insertable and removable from tray 5 in order to be able to accommodate an optical recording medium 25 of lower diameter.

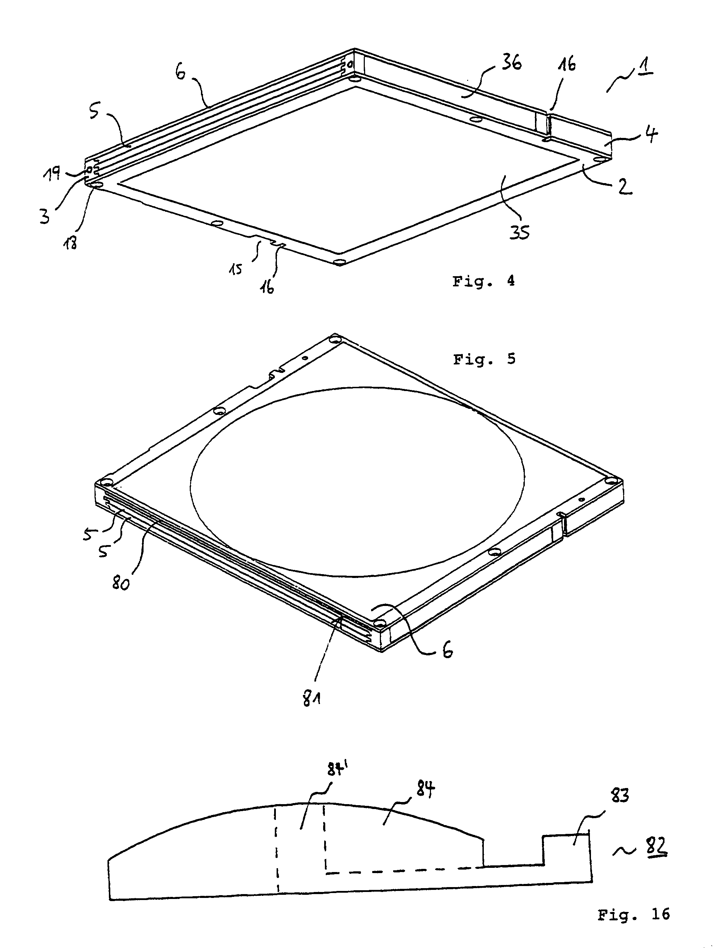

Fig. 4 shows a bottom view of a container 1 according to the invention. The bottom plate 2 is provided with a rectangular depression 35 which depression is about 0.1 mm deep. The depression 35 is preferably used to stick a label on it. Because of the depth of the depression and the thickness of the label, which latter is smaller than the former, no additional thickness to the container 1 is added. At side wall 4 there is provided a depression 36 which is also suited for sticking a label on it. Here, too, the thickness of the label is smaller than the depth of the depression 36 so that the size of the container 1 is not increased even if a label is sticked on it. The advantage of a label sticked at depression 36 is, that it is visible, even if several containers 1 are stacked together. In this case only the depression 34 of the lowest container 1 in the stack would be visible, whereas all depressions 36 of the stacked containers 1 are visible, and thus all labels arranged there. In order to increase the size of depression 36 release groove 16 might be moved nearer to the end of side wall 4. The dimensions of the outer surfaces of trays 5 and the parts surrounding trays 5 are such that there is only very small open space between trays 5 and surrounding parts. This ensures that it is very unlikely that dust or other particles that might have a disturbing effect may enter into the container 1.

Fig. 5 shows a top view of the container of Fig. 4. Difference to the container 1 of Fig. 4 is, that it contains only two trays 5 and that instead of the uppermost tray 5 there is provided an opening 80 for storing additional items. E.g. a booklet, containing information with regard to the optical disks 25 stored within the trays 5, may easily be housed between cover plate 6 and an additional, closed layer 81, and being accessible via opening 80. Preferably the opening 80 is arranged at the position of the lowermost tray 5, which is not shown here. This has the advantage that the stored item, e.g. the booklet, may be visible through the bottom plate 2. In any case, the stored item does, in this arrangement, not prevent visibility through window 8 onto the disk 25 stored.

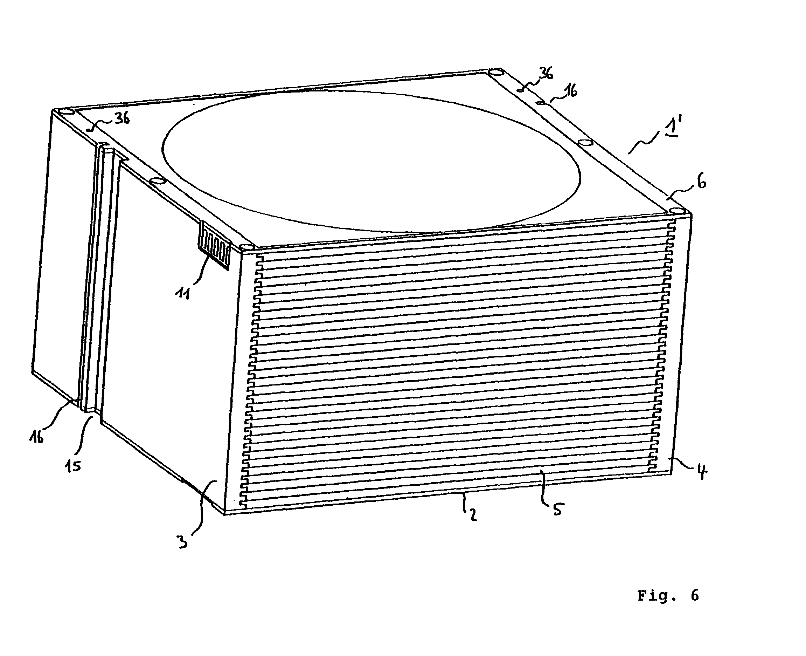

Fig. 6 shows a large container according to the invention. The construction of this container 1' is similar to that of Fig. 1. On a bottom plate 2 there are arranged side walls 3, 4 the height H of which is much larger than for those of Fig. 1. Accordingly a higher number of trays 5 is stacked between side walls 3, 4. In the example there are stacked 31 trays. The cover plate 6 is similar to the one already described. Orientation groove 15 and release groove 16 extend over the entire height of the side walls, while identification area 11 keeps similar size as for the container 1 of Fig. 1. Holes 36 are used to fix the axes of rotation of levers 21 with which locking and releasing of trays 5 is made possible.

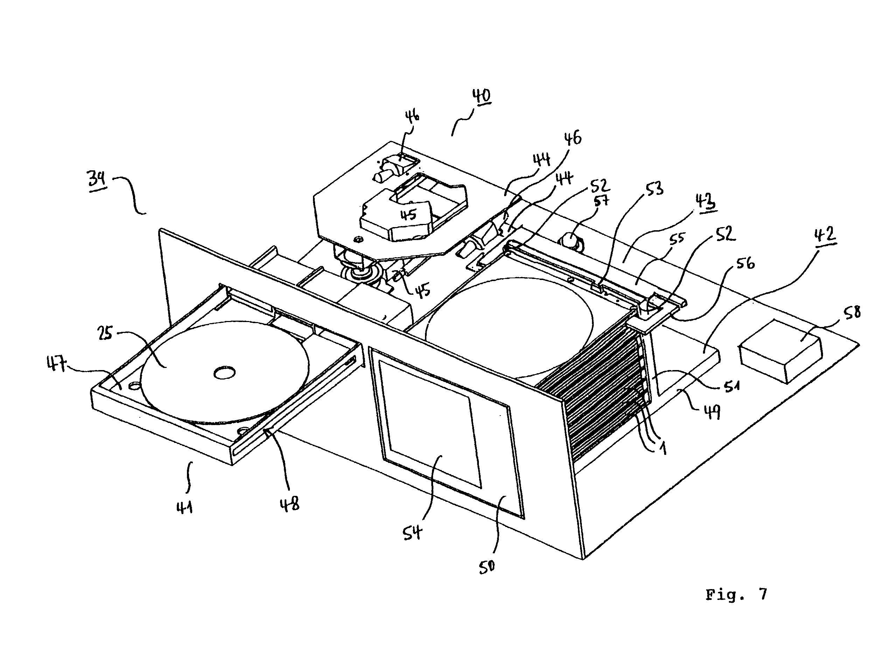

Fig. 7 shows a magazine type player and/or recorder according to the invention. The magazine type player 39 comprises an optical pick-up unit 40, a drawer 41, a magazine tray 42 and a tray moving mechanics 43.

The optical pick-up unit 40 consists of two mechadecks 44, each of which being equipped with an optical pick-up 45, respective electric motors 46 and other parts usually available on a mechadeck 44 of an optical read/write device, known to the skilled person. The drawer 41 is shown in an outward position in which it is possible to manually insert or remove an optical recording medium 25. The recording medium 25 is shown in the disk receiving portion of the drawer 41 which is also the tray receiving portion 47. For being loaded with a tray 5 and for removing the tray 5 from the tray receiving portion 47 the drawer 41 is provided with a guiding slot 48. Through guiding slot 48 a tray 5 may be inserted to or removed from the drawer 41.

The magazine tray 42 has a base plate 49 on which a front wall 50 and a rear wall 51 are arranged. Between the front wall 50 and the rear wall 51 several containers 1 are stacked one over the other. Walls 50, 51 are provided with guiding ribs 52 in order to guide the containers 1 within the stack. The rear wall 51 further is provided with an orientation rib 53 for making it impossible to insert a container 1 in wrong direction, for example in upside down direction. The front wall 50 is provided with a transparent window 54 for enabling a user to directly look at the stacked containers 1, especially at a label attached to depression 36 of a container 1.

The tray moving mechanics 43 are provided with a slider 45, a pushing element 56 and a motor 57. Further elements and working effect of the tray moving mechanics 43 will be described later on. A control unit 58 for controlling working of the different parts of the device and for storing and keeping information about stacked containers 1 and disks contained in the containers 1 as well as means for creating unique codes to be assigned to different containers 1 is also present.

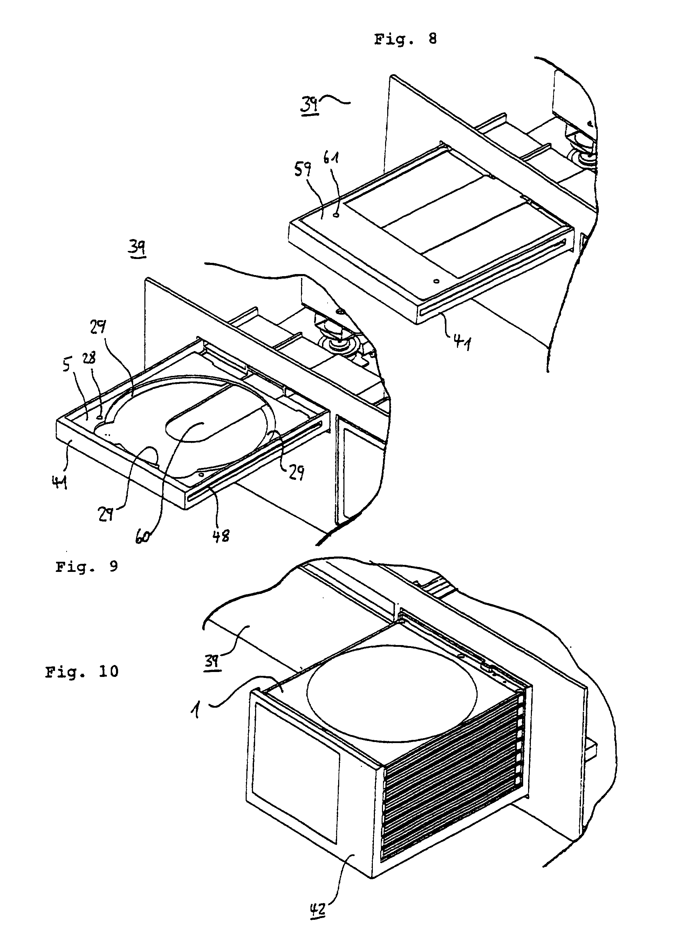

Fig. 8 shows the left part of a magazine type player according to Fig. 7. In this figure the drawer 41 is loaded with a cartridge 59 in which an optical recording medium 25 is housed. The cartridge 59 is for example a cartridge according to the DVD-RAM standard.

Fig. 9 shows the left part of a magazine type player 39 similar to the one of Fig. 8 wherein, in this case, the drawer 41 is loaded with a tray 5 according to the invention. The tray 5 was inserted into drawer 41 via the guiding slot 48. It is guided within the drawer 41 in guiding grooves (not shown) so that it cannot be removed manually from the drawer 41. It is just possible to remove and insert the disk carried on the tray 5. In this figure the radially inwardly extending support areas 29 are visible. At the bottom of the drawer 41 there is an access hole 60 for enabling access to the optical recording medium 25 from the downside. This access is for example a mechanical access in order to fix the disk position and to rotate the disk 25. It is also an optical access for guiding a light beam through access hole 60 to the disk 25 in order to scan the data stored on the disk or to write new data onto the disk. As can be seen there is no support area 29 in the area of the access hole 60 thus enabling access to the disk 25 even in its most outer region. The orientation holes 28 of tray 5 are placed at the same position as orientation holes 61 of cartridge 59 of Fig. 8, so that the exact position of tray 5 and thus the disk 25 held by the tray 5 is fixed by the same means that also fix the correct position of cartridge 59.

Fig. 10 shows the right part of the magazine type player of Fig. 7 in a container changing position. A magazine tray 42 is shown in its outer position in which the user may access to the containers 1. In this position one or several containers 1 may be removed and new containers 1 may be added. In the figure there are only shown containers 1 containing three disks each. However, it is also possible to stack larger containers into the magazine tray, e.g. 7-tray-containers, 15-tray-containers, 31-tray-containers etc. The stack of containers 1 constitutes thus a disk magazine being more compact than already known disk magazines of similar storage capacity.

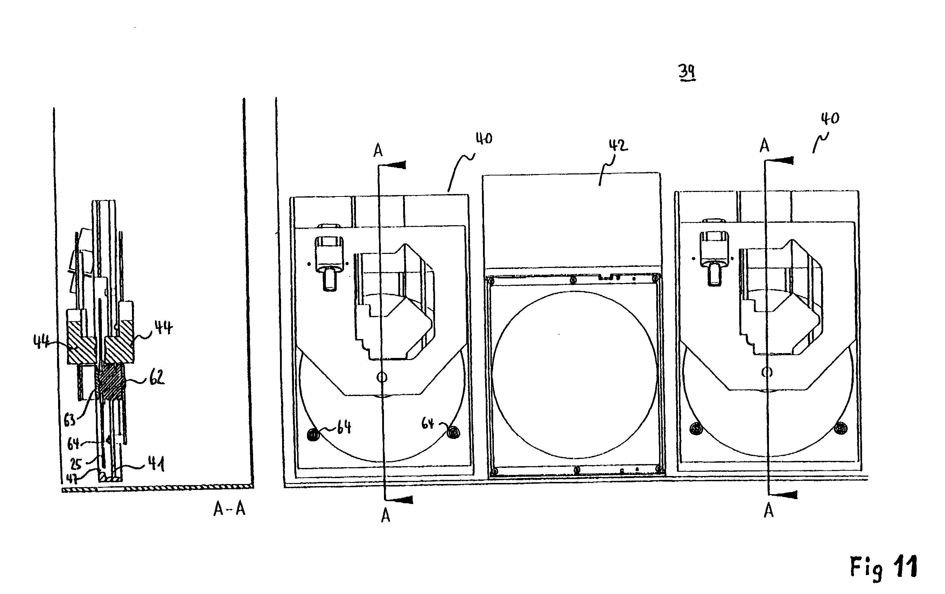

Fig. 11 shows a magazine type player having two optical pick-up units 40. On the right hand side there is shown a top view of the player 39 having two optical pick-up units 40 being arranged at the left and the right side of the magazine tray 42. For ease of visibility the tray moving mechanics are not shown in this picture. On the left hand side there is shown a cross sectional view along line AA. The two mechadecks 44 are visible. The lower one, which is shown on the right side, comprises a disk motor 62 whereas the other comprises clamping means 63 instead of a disk motor 62. Disk motor 62 and clamping means 63 provide for fixing and rotating the disk 25. Orientation pins 64 provide for exact positioning of mechadeck 44 relative to drawer 41 and, if available, cartridge 59 or tray 5 being arranged within the tray receiving portion 47 at the drawer 41.

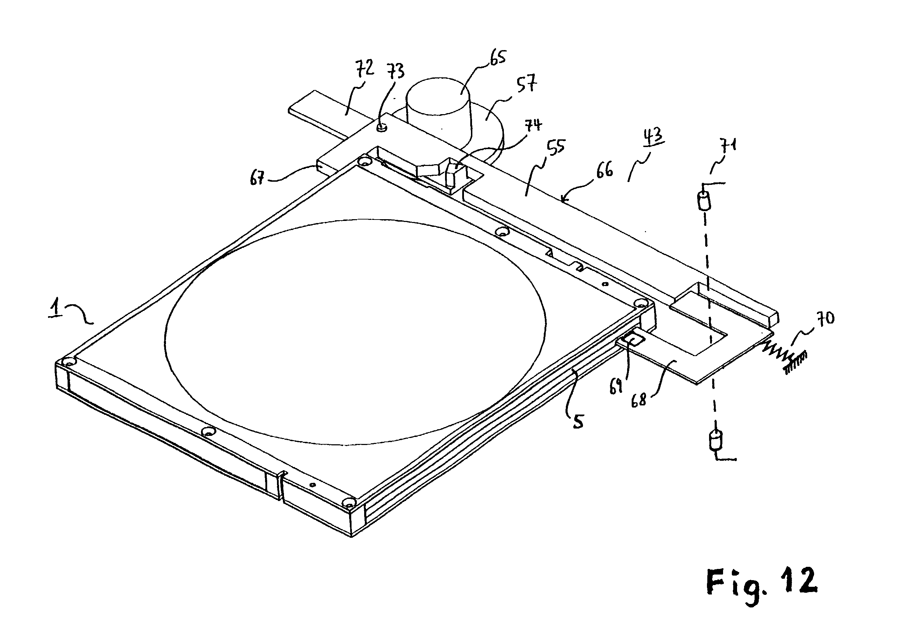

Fig. 12 shows a container 1 and a tray accessing mechanism of a magazine type player. A motor 57 drives a toothed wheel 65, which engages a toothed rack 66 of the slider 55. At the left side, the slider 55 is provided with a push nose 67 for pushing a tray 5 into its rest position within the container 1. At the other end of slider 55 it is in contact with a pushing element 68. Pushing element 68 is of U-shaped form, wherein one leg is in contact with slider 55 while the other leg is positioned in short distance from a tray 5. At this leg there is provided a pressure sensor 69 for sensing if the pushing element 68 is in contact with a tray, bottom plate 2, cover plate 6 or anything else. The pushing element 68 is further pre-stressed by a pushing means 70 which is diagrammatically shown to be a spring. A movement sensor 71 is diagrammatically shown as a light barrier. In case that pushing element 68 is moved, the light path is blocked and movement sensor 71 indicates that pushing element 68 is moved out of its rest position. At the left side of slider 55 there is provided a pull lever 72, which is rotatable about an axis 73. At its right end the pull lever 72 is provided with a pulling nose 74 at its lower side, which is not visible here. Pull lever 72 co-acts with a cam 75, when the slider 55 is moved, in order to change the rotational position of pull lever 72.

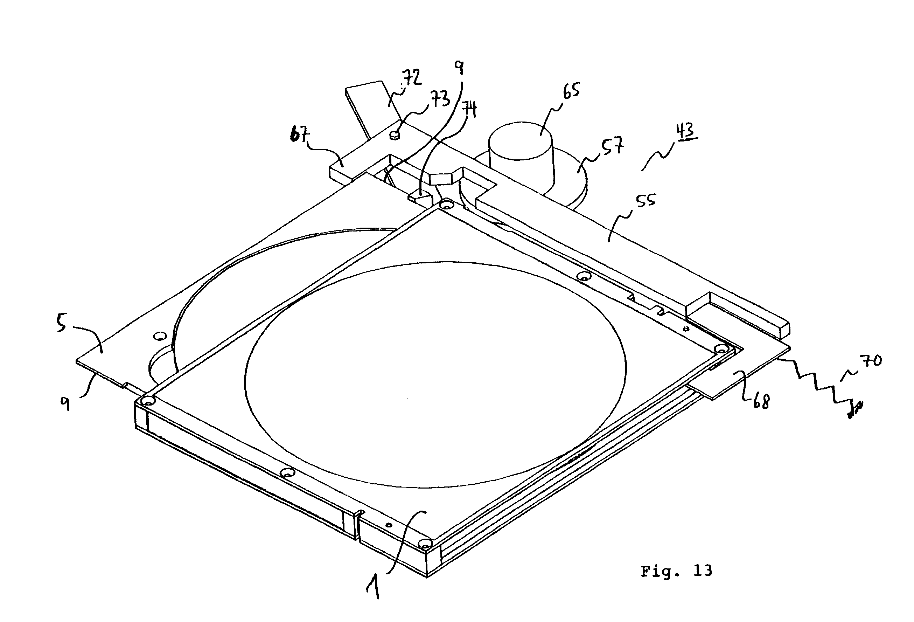

Fig. 13 shows the tray accessing mechanism of Fig. 12 during a tray releasing process. In can be seen, that, driven by motor 57 and tooth wheel 65, the slider 55 has moved to the left side. This has caused the pushing element 68 to be pushed by pushing means 70 with its one leg into the container 1. After having come into contact with a tray 5, the pushing element 68 has pushed this tray 5 partly out of the container 1. During this movement tray 5 is still near to or in contact with push nose 67. The leftward movement of slider 55 has caused the pull lever 72 to be pivoted about its axis 73 caused by its interaction with cam 75 (not visible). At the end of this movement pulling nose 74 is in contact with projection 9 of tray 5. The further outward movement of tray 5 is now caused by the movement of pulling nose 74 pulling projection 9 and thereby tray 5 out of the container 1.

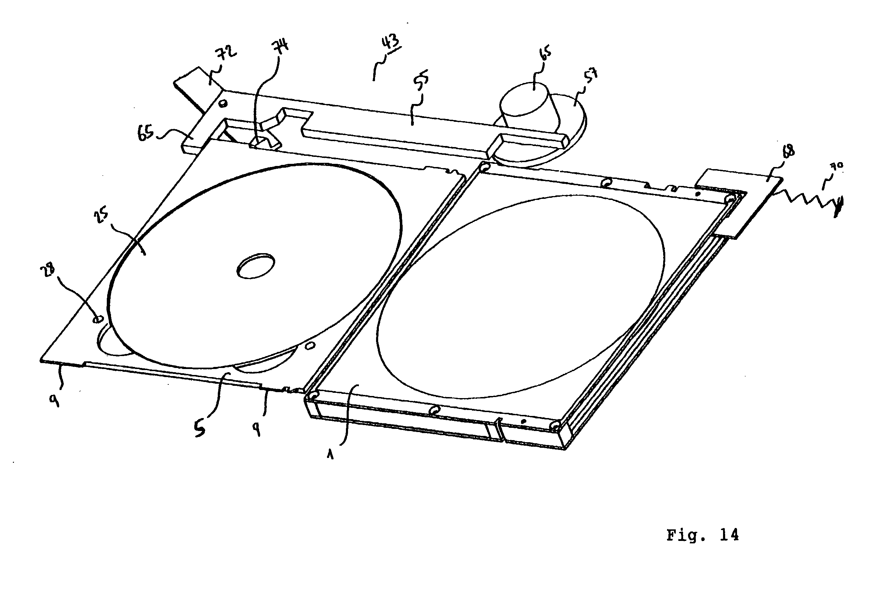

Fig. 14 shows a tray accessing mechanism in a released tray position in which tray 5 is completely removed from container 1. Pushing element 68 rests in its position where it is in contact with container 1 while slider 55 has reached its end position. The mechadecks 44 which have been pivoted out of their working position in order to make possible accession of tray 5 and disk 25 into the playback position are now moved towards disk 25. By this, orientation pins 64 are brought in a position to cooperate with orientation holes 28 in order to assure the exact position of the optical recording medium 25 and disk motor and clamping means 63 come in contact with disk 25.
After disk 25 has been accessed and tray 5 shall be brought back to container 1, the mechadecks 44 are again removed from disk 25 and the inward movement may start. Therefore, slider 55 is moved by the toothed wheel 65 in rightward direction. Push nose 67 pushes tray 55, which is guided within guide rails of the magazine tray 42, through guiding slot 48 in direction of the container 1. The cross sectional shape of guiding slot 48 is thus that it exactly positions tray 5 vertically in order to exactly enter the opening of container 1. Tray 5 is pushed further into container 1 until it reaches its end position in which locking means 20 fix its position. Before reaching the end position corresponding to Fig. 12, pull lever 72 is rotated again into its rest position wherein pulling nose 74 is out of contact with the tray, pushing element 68 is then also pushed back to its rest position.

In case that a tray is missing in the container 1 and access should be made to the respective position, the pressure sensor 69 will not sense contact. However, the movement sensor 71 will sense movement of pushing element 68. In this case, the control unit 58 stops the outward movement of slider 55 and makes it move back to its rest position. In case that no tray is available, it is not necessary to move the slider 55 further on.

For accessing a certain tray 5, tray moving mechanics 43 as well as the optical pick-up unit 40, which both are interconnected to be moved synchronously, are moved upwards or downwards in order to reach the specific trays' position. Usually the trays are in predetermined distances from each other, so that stepwise movement of tray moving mechanics should allow for correct positioning with respect to a tray 5. However, orientation grooves 19 make possible to assure the correct position relative to the tray 5 in order to correctly reposition tray moving mechanics 43.

Advantages of the idea of the invention are, that the container 1 is integral part of the magazine tray 42 and that the optical disk 25 can be automatically moved from the container 1 into its playback position in the device 39. A further advantage is, that no additional waste is produced, as packaging in the store is the same as packaging in the magazine type device 39. Apart from container 1, no additional packaging is necessary. This container 1 has advantageously small size, comparable to known Jewel boxes, but relatively large storage capacity.

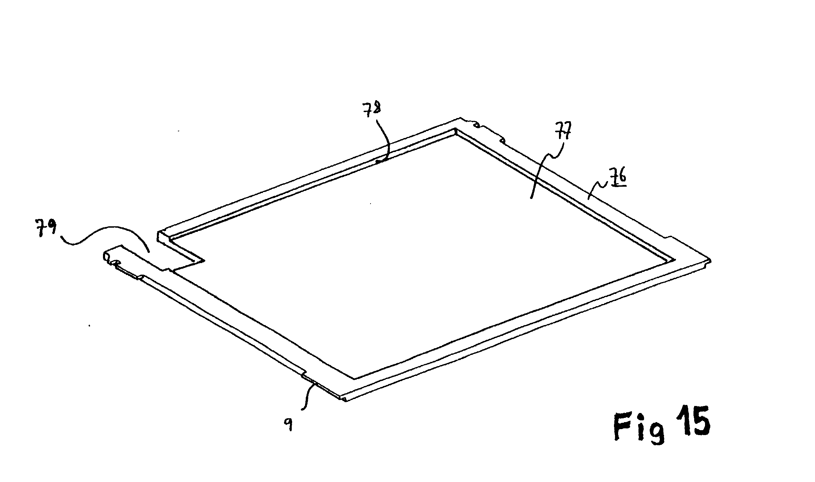

Figure 15 shows a tray 76 for storing additional items. The sides co-acting with side walls 3, 4 of container 1 are identical to those of the disk carrying trays 5 described before. Difference is, that tray 76 has a nearly completely closed bottom plate 77 above which is provided a rectangular space for storing additional items, preferably a booklet relating to one or several of the disks stored in the other trays 5 of a container 1. This open space is surrounded by side walls 78 wherein the thickness of the bottom plate 77 is about 1/4 to 1/2 of the height of the side walls 78. A hole 79 is provided for accommodating pushing element 68. In case that tray 76 is accessed by the tray moving mechanics 43, it should not be moved out of the container as it does not contain a disk 25. Pushing element 68 does not come into contact with tray 76 as it enters the hole 79. In this case, pressure sensor 69 does not indicate contact while movement sensor 71 indicates movement of pushing element 68. In this case, control unit 58 indicates, that there is no tray which is to be moved into a replay position. Therefore, the tray moving mechanics 43 is stopped and moved back into its rest position.

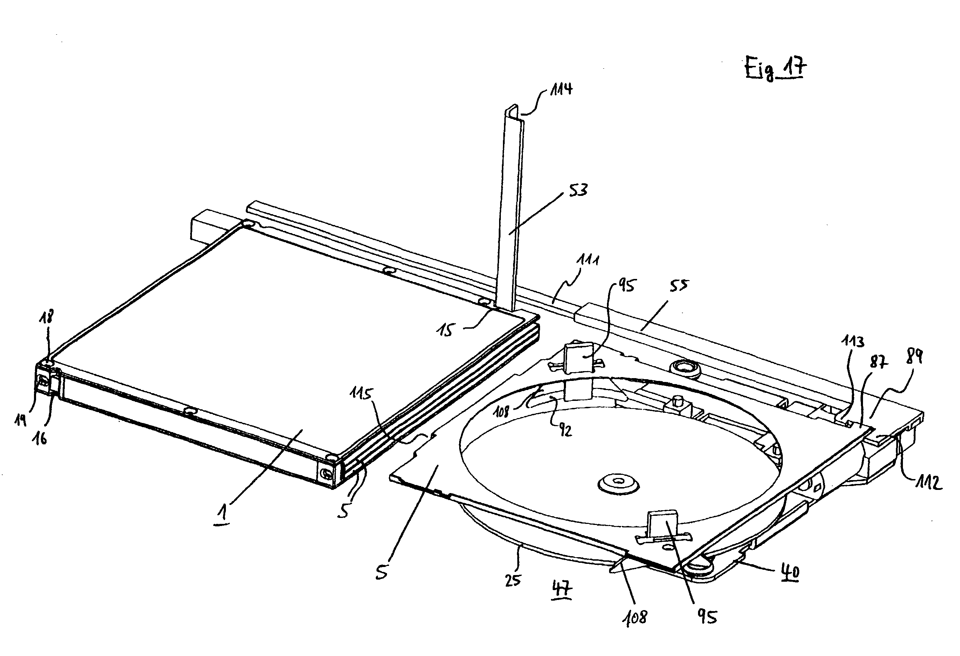

Fig 16 shows a different type of pushing element 82 in top view. This pushing element 82 is provided with a first leg 83 for coacting with said slider 55 and with a second leg 84,84' for coacting with said tray 5. The second leg 84,84' is arranged such distant from the first leg 83 so that it is able to contact said tray 5 substantially in the middle area of said tray 5. The tray 5 is thus pushed at its middle area which reduces the probability of tilt of tray 5 when being pushed out. A further advantage lies in the fact that the second leg 84,84', when being inserted into the containerl for pushing out tray 5, acts as a fixing means for a disk 25 being stored in the tray 5 which is arranged below the actually moved out tray 5. Even in case of vibrations of the player 39 or other mechanical disturbances the disk 25 is securely held in its rest position on the respective tray 5. Preferably the second leg 84 has a rounded shape as shown in the figure. It then enters into the opening in which the tray 5 is housed with the full width of the tray 5 so that no opening is left uncovered. According to a different embodiment which is shown by dotted lines in the figure, leg 84' is of small width, similar to the leg of pushing element 68 described above.

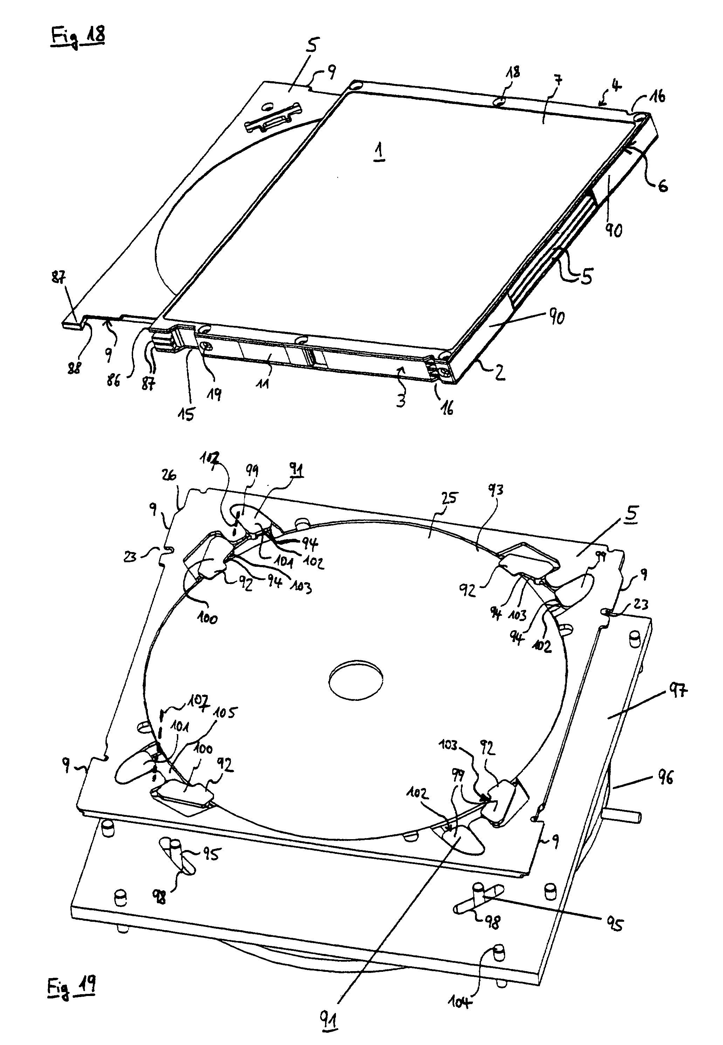

Fig. 17 shows another type of magazine type player according to the invention in a perspective view omitting to show many parts not necessary to be described to a skilled person in detail. A container 1 as described in more detail with regard to Fig. 18 is used. Middle and lower tray 5 are within the container 1 while the upper tray 5 is removed from the container 1 into the tray receiving portion 47 of the player. A slider 55 slideable on a rail 111 is provided with a push-pull element 89 having a pushing nose 112 as pushing element 56 for pushing tray 5 back into the container 1, and a pulling nose 113 for pulling tray 5 out of container 1. Both coact with hook 87 of tray 5. Disk 25 is in this view already released from the tray 5 and attached to optical pickup unit 40. As can be seen, the disk is below the tray 5, tray 5 thus opens and releases the disk in downward direction. Disk release pins 95 approach tray 5 from its upper side, coact with swinging type disk holders 108 for urging them to swing downwards. Disk release pins 95 also coact by means of an outwardly extending protjection, not visible here, with holding projection 92 of disk holder 108. Thus disk release pin 95 in this case also acts as tray holder in order to move tray 5 away from disk 25 in order to allow for playback. The downward position of disk holders 108 is shown here. Different types of release pins and disk holders will be described with regard to the following figures. Although these following figures show an opening of the disk holders 91,108 in a way that allows that allows to remove disk 25 to the top side, they are of course also usable in devices needing downside opening. Even use in sideways opening devices is possible due to the disk fixation by disk holders 91,108. An orientation rib 53 reaches into orientation groove 15 of container 1. Thus correct orientation of the container 1 within the device is assured. Orientation rib 53 has further a vertically extending recess 114 through which pulling nose 113 moves in vertical direction if slider 55 is in its position moved into the container 1. Thus access to any other tray 5 in the container 1 or any other container stacked within the magazine is provided. Tray 5 is provided with a stepped projection 115 that partially is in contact with back walls 90 of container 1, shown in Fig. 18, and partially fits within space between back walls 90 when tray 5 is completely inserted into container 1. Stepped projection 115 has thus stopper function, dust protection function, tray insertion indication and tray removal actuation enabling function.

Fig. 18 shows, in a perspective view, a different type of container according to the invention. Most parts are similar to those as described above especially with regard to Fig. 1 and therefore not described in detail here. Orientation groove 15 is arranged near the front edge 86 of the container. The side wall 3 does not extend up to this front edge 86 so that there is a space between bottom plate 2 and cover plate 6. Into this space hooks 87 of trays 5 extend. The hooks 87 have a slightly inclined face 88 in order to reliably coact with a pulling nose 113 of a push-pull element 89 for removing the tray 5 from container 1. Container 1 of this embodiment is provided with orientation grooves 19 at side walls 3,4 in order to provide for correct positioning of container 1 within a magazine or another storing device. Orientation grooves 19 as well as connector openings 18 may also be used to seize or grab container 1 in order to move it e.g. into a magazine type player or within such device. Also other openings or recesses of container 1 as e.g. orientation groove 15 may be used therefor. Container 1 is further provided with back walls 90 at least partly closing the back side of container 1 which is the visible side in the drawing. Thus the container is open for removal and insertion of trays 5 only at its front side while the opposite side, the back side, is partially closed. Back walls 90 assure higher stability of the container 1. It is to be understood that many of the features described here but not shown in other embodiments described elsewhere in this application may advantageously be incorporated there and vice versa.

Fig. 19 shows a perspective view of a tray 5 with rotating type disk holders 91 in holding position, i.e. the disk 25 is held unreleased. Holding projections 92 of disk holders 91 extend radially inwardly over the upper part of the outer rim 93 of disk 25 and thus being a disk holding area. Lower part of outer rim 93 of disk 25 is supported by a support area 29 of the tray 5 which is not visible in this view. Disk holder 91 has a side actuating face 94 being a first actuating face. This side actuating face 94 is provided to coact with a disk release pin 95 being a first actuating means. Disk release pin 95 is part of a disk release ring 96 of a magazine type player. In the shown embodiment disk release ring 96 is arranged below a tray holder 97 through holes 98 of which disk release pins 95 extend. Pins 95 are in a middle postion of holes 98 in order to fit when brought in contact with tray 5 independent of holders 91 being in holding or releasing position. Holders 91 are designed such that opening 105 is always free to receive pins 95 if these are in their middle position of hole 98. In the shown view, tray 5 and tray holder 97 are not yet in contact. This positional relation corresponds to a situation where the tray 5 is already removed from the container to tray receiving portion 47 but not yet brought in contact with the tray holder 97. Disk holder 91 further has a top actuating face 99 being a second actuating face. Top actuating face 99 is manually actuatable e.g. by the fingers of a user in order to release a disk 25 from the tray 5 or to fix a disk 25 at the tray 5. Disk holder 91 comprises two arms 100,101 being rigidly connected to one another, or being a single part, and being pivotable with respect to an axis 107 diagramatically indicated in the figure. Actuation of top actuating face 99 allows disk holder 91 to rotate about a certain angle. In the end positions of the rotational movement of disk holder 91 the dimensions of the surrounding parts of the tray 5 are designed such that friction prevents undesired movement of the disk holder 91. Position fixing means is in this case frictional force. Alternatively, not visible in this view, snap connections or other suitable connections may be provided. For actuation by means of disk release pins 95 arm 100 is provided with actuation edge 103 and arm 101 is provided with actuation edge 102.

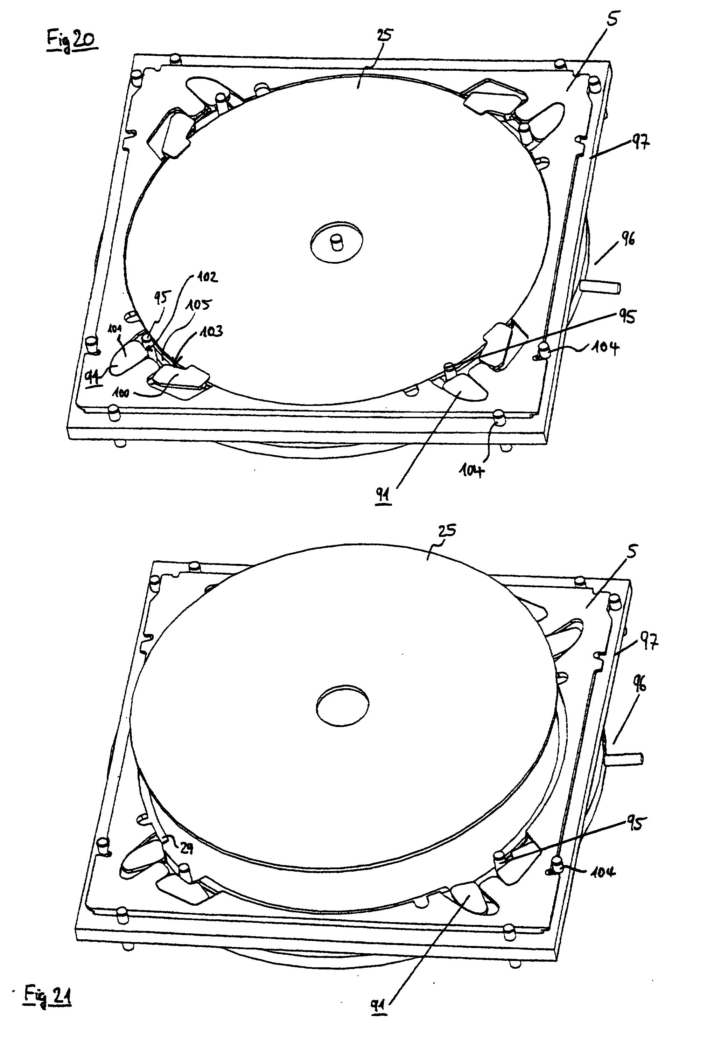

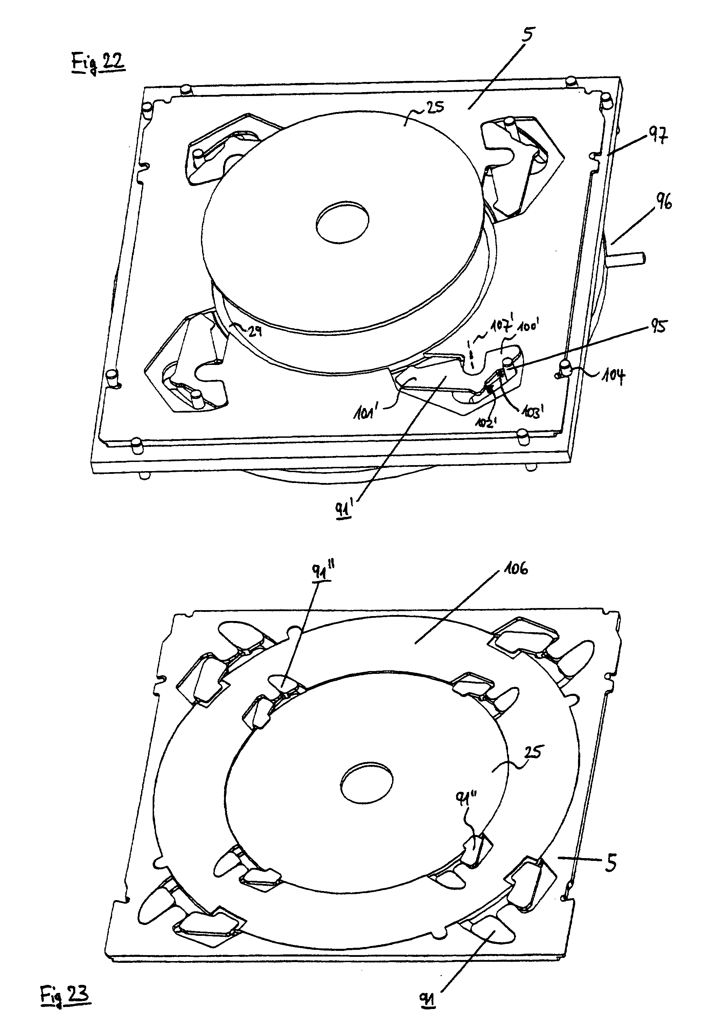

Fig. 20 shows a perspective view of tray 5 of Fig. 19 with disk holders 91 in holding position. Tray 5 and tray holder 97 are in contact, pins 104 provide for correct orientation and for fixation of tray 5 to tray holder 97. Disk release pins 95 extend trough openings 105 between tray 5 and disk 25. Disk release pins 95 are in contact with arms 101 and thus with first actuation edge 102. Release of disk 25 may start by starting rotational movement of disk disk release ring 96. Disk release pins 95 thus start to move in counterclockwise direction, come into contact with actuation edges 103 and thus start rotational movement of disk holder 91 until end position as shown in Fig. 21 is reached.

Fig. 21 shows tray 5 of Fig. 20 with disk holder 91 in disk release position. Tray holder 97 has moved tray 5 away from the playing position of disk 25, for reason of simplicity disk 25 is shown in this position without showing clamping means, pickup means etc. In this remote position, support area 29 of tray 5 is visible. Rotatable type disk holders 91 open in radial direction of the disk 25.

Fig. 22 shows a tray 5 for a small diameter disk 25 in similar state as shown in Fig. 21. Rotating type disk holder 91' is arranged rotatably around axis 107'. It has a short first arm 100' and a longer second arm 101'. Pin 95 is in contact with actuation edge 103' while actuation edge 102' will be actuated in order to move holder 91' in its holding position.

Fig. 23 shows a tray 5 with adapter 106 for a small diameter disk 25. Adapter 106 is held and released as a normal diameter disk 25 at tray 5. Adapter 106 itself is provided with disk holders 91" which are designed similarly as described above for tray 5. They are actuated by disk release pins similar to pins 95 which are arranged radially inwardly, not visible here.

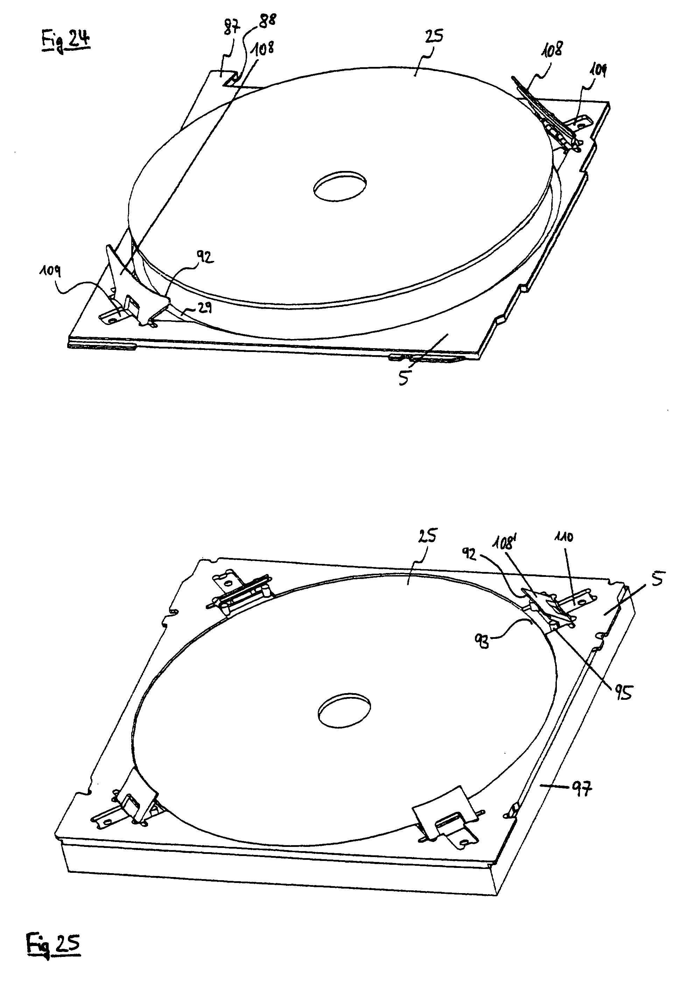

Fig. 24 shows a tray 5 with swinging type disk holders 108 in a disk release position. Two swinging type disk holders 108 are sufficient to hold the disk 25 as their holding projections 92 extend over a relatively large angle. Disk holders 108 are held in their respective position by snap fitting. Alternatively, spring operation is provided to urge disk holders 108 in hold position. Springs may therefore be provided in spring recesses 109 as position fixing means. An open position as shown is then possible if disk holders 108 are held open actively.

Fig. 25 shows a tray 5 with a slightly different type of swinging disk holder 108', also opening in axial direction of the disk 25. Four disk holders 108' are provided, being urged into their holding position by means of spring plates 110 and held in their open position by means of disk release pins 95 being arranged on tray holder 97. These pins 95 are fixed to tray holder 97, no separate movement is necessary. If a user wants to release disk 25 manually, the disk 25 is to be actuated at its inner hole so that its outer rim 93 urges holding projections 92 in order to swing holders 108' to an open position.

The invention provides for a versatile disk container and magazine player system, allowing to store disks at high density, to give access to disks while preventing disks to unintentionally fall out, to reduce the size of a magazine player and to add the magazine and tray load and unload mechanism to many given types of disk drive, independent of its dimensional properties. Elements of container and tray are proposed according to the invention thus to fit within the extremely low height as well as small width and depth dimensions but also provide for reliable, stable, quick and user friendly working.

## Claims

1. Container for optical disks comprising at least one slidable tray (5), guiding means (10) for guiding said tray (5), a cover plate (6) and a bottom plate (2), **characterized in that** the sum of the thicknesses of said cover plate (6) and said bottom plate (2) equals the thickness of said tray (5) such that the distance between any two trays (5) is an integer multiple of the thickness of said tray (5) if two or more containers (1) are stacked.

2. Container according to claim 1, **characterized in that** it contains three trays (5).

3. Container according to one of the preceding claims, **characterized in that** the outer dimensions of the container (1) substantially equal those of a standard Jewel box or a standard DVD storage box.

4. Container according to one of the preceding claims, **characterized in that** it is open at one side for insertion and removal of the trays (5) and that it is partially closed at the opposite side.

5. Container according to one of the preceding claims, **characterized in that** it comprises a releasable locking means (21) for locking the trays (5) in their position within the container (1).

6. Container according to one of the preceding claims, **characterized in that** it comprises an orientation groove (15).

7. Container according to anyone of the preceding claims, **characterized in that** it contains an identification area (11).

8. Container according to one of the preceding claims, **characterized in that** it comprises a read-write protection means (14).

9. Container according to anyone of the preceding claims, **characterized in that** it is, in top view, of rectangular shape, having first and second base lines (D, W), the first base line (D) being shorter than the second base line (W), the first base line (D) being less than 5% larger than the diameter of the largest optical disk (25) to be stored within the container (1), the second base line (W) being less than 20% larger than the diameter of the largest optical disk (25) to be stored within the container (1), the container (1) having side walls (3, 4) being arranged at the outer ends of the second base line (W) and extending in direction of the first base line (D), the container (1) having openings being arranged between said side walls (3, 4) and extending along the second base line (W), said openings being closed by side surfaces of trays (5) which are accommodated within the container (1), said side surfaces of said trays (5), and surfaces of side walls (3, 4) and end surfaces of bottom plate (2) and cover plate (6) forming a substantially even plane.

10. Container according to one of the preceding claims, **characterized in that** a first locking means (21) is arranged to lock and unlock all of the trays (5) stored within the container (1), and that a second locking means (21) is provided for locking and releasing each single tray (5) independently of the other trays (5).

11. A system including a container (1) for optical disks (25) according to one of claims 1-10 and a tray (5), the tray (5) comprising gripping holes (27), a support area (29) for supporting an optical disk (25) at the lower surface of its outer rim, an opening in said support area (29) for enabling access up to the radially outwardly area of an optical disk (25), the upper surface of said support area (29) rising in cross sectional view from its radially inner end to its radially outer end, guiding means (9) for guiding the tray (5) within the container (1), and an orientation hole (28).

12. A system including a container (1) for optical disks (25) according to one of claims 1-10 and a tray (5), the tray (5) comprising a support area (29) for supporting an optical disk (25) at the lower surface of its outer rim (93), and a releasable disk holder (91,91',91",108,108') for holding an optical disk (25) at the upper surface of its outer rim (93).

13. The system according to claim 11 or 12, further including an adapter for a tray (5), the adapter having an outer shape to fit in said tray (5), gripping holes (32), an inner support area (33) for supporting an optical disk (25) at the lower surface of its outer rim, and an outer support area for being supported by the support area (29) of said tray (5), the upper surface of said inner support area (33) rising in cross sectional view from its radially inner end to its radially outer end, an opening (34) in said support area (33) enabling access to the radially outwardly area of a disk, the adapter being asymmetric.

14. A system including a container (1) for optical disks (25) according to one of claims 1-10 and a magazine type player and/or recorder, the magazine type player and/or recorder comprising an optical pick-up unit (40), a magazine tray (42) for accommodating at least one container (1), the magazine tray (42) having an orientation rib (53), and a slider (55) for moving a single tray (5) out of said container (1) into a tray receiving portion (47) of said optical pick-up unit (40), said slider (55) and said optical pick-up unit (40) forming a single vertically movable unit.

15. System according to claim 14, **characterized in that** it comprises a drawer (41) for receiving one of a single disk (25), a cartridge (59), and a tray (5) from a container (1).

16. System according to claim 14 or15, **characterized in that** said tray receiving portion (47) comprises a disk release ring (96) for actuating a disk release pin (95).

## Patentansprüche

1. Behälter für optische Platten mit wenigstens einem verschiebbaren Plattenteller (5), Führungsmitteln 10 zur Führung des Plattentellers (5), einer Deckplatte (6) und einer Bodenplatte (2),
**dadurch gekennzeichnet, dass**
die Summe der Dicken der Deckplatte (6) und der Bodenplatte (2) gleich ist der Dicke des Plattentellers (5), derart, dass der Abstand zwischen je zwei Plattentellern (5) ein ganzzahliges Vielfaches der Dicke des Plattentellers (5) ist, wenn zwei oder mehrere Behälter (1) gestapelt sind.

2. Behälter nach Anspruch 1, **dadurch gekennzeichnet, dass** er drei Plattenteller (5) enthält.

3. Behälter nach einem der vorangehenden Ansprüche, **dadurch gekennzeichnet, dass** die Außenabmessungen des Behälters (1) im Wesentlichen gleich denjenigen einer Standard-Jewel Box oder einer Standard-DVD-Speicherbox sind.

4. Behälter nach einem der vorangehenden Ansprüche, **dadurch gekennzeichnet, dass** er an einer Seite offen ist zum Einlegen und Herausnehmen der Plattenteller (5) und dass er an der gegenüberliegenden Seite teilweise geschlossen ist.

5. Behälter nach einem der vorangehenden Ansprüche, **dadurch gekennzeichnet, dass** er freigebbare Verriegelungsmittel (21) für die verriegelung der Plattenteller (5) in ihrer Lage in dem Behälter (1) enthält.

6. Behälter nach einem der vorangehenden Ansprüche, **dadurch gekennzeichnet, dass** er eine Orientierungsnut (15) enthält.

7. Behälter nach einem der vorangehenden Ansprüche, **dadurch gekennzeichnet, dass** er einen Identifikationsbereich (11) enthält.

8. Behälter nach einem der vorangehenden Ansprüche, **dadurch gekennzeichnet, dass** er Lese/Schreib-Schutzmittel (14) enthält.

9. Behälter nach einem der vorangehenden Ansprüche, **dadurch gekennzeichnet, dass** der in der Draufsicht ein rechteckige Form hat mit einer ersten und einer zweiten Grundlinie (D, W), dass die erste Grundlinie (D) kürzer ist als die zweite Grundlinie (W), dass die erste Grundlinie (D) um weniger als 5% größer als der Durchmesser der größten optischen Platte (25) ist, die in dem Behälter (1) aufbewahrt werden soll, dass die zweite Grundlinie (W) um weniger als 20% größer ist als der Durchmesser der größten optischen Platte (25), die in dem Behälter 1 aufbewahrt werden soll, dass der Behälter (1) Seitenwände (3, 4) an den äußeren Enden der zweiten Grundlinie (W) enthält, die sich in Richtung der ersten Grundlinie (D) erstrecken, dass der Behälter (1) Öffnungen enthält, die zwischen den Seitenwänden (3, 4) liegen und sich entlang der zweiten Grundlinie (W) erstrecken, dass die Öffnungen durch Seitenflächen von Plattentellern (5) geschlossen sind, die in dem Behälter (1) angepasst sind, dass die Seitenflächen der Plattenteller (5) und die Flächen der Seitenwände (3, 4) und Endflächen der Bodenplatte (2) und die Deckplatte (6) eine im Wesentlichen glatte Ebene bilden.

10. Behälter nach einem der vorangehenden Ansprüche, **dadurch gekennzeichnet, dass** erste Verriegelungsmittel (21) vorgesehen sind zur Verriegelung und Entriegelung aller in dem Behälter (1) aufbewahrten Plattenteller (5) und dass ein zweites Verriegelungsmittel (21) vorgesehen ist zur Verriegelung und Freigabe jedes einzelnen Plattentellers (5), unabhängig von den anderen Plattentellern (5).

11. System mit einem Behälter (1) für optische Platten (25) nach einem der Ansprüche 1 bis 10, und einem Plattenteller (5), dass der Plattenteller (5) Ergreifungslöcher (27) enthält, mit einem Stützbereich (29) zur Aufnahme einer optischen Platte (25) an der Unterseite seines Außenrands, und mit Öffnungen in dem Stützbereich (29) für einen Zugriff zu dem radial nach außen gerichteten Bereich einer optischen Platte (25), die Stützbereich (29) in seinem Querschnitt von dem radialen inneren Ende mit Führungsmitteln (9) zur Führung des Plattentellers (5) in dem Behälter (1) und mit einem Orientierungsloch (28).

12. System mit einem Behälter (1) für optische Platten (25) nach einem der Ansprüche 1 bis 10 und einem Plattenteller (5), wobei der Plattenteller (5) einen Stützbereich (29) enthält für die Aufnahme einer optischen Platte (25) an der Unterseite des Außenrands (93) und einem freigebbaren Plattenhalter (91, 91', 91'', 108, 108') zur Haltung einer optischen Platte (25) an der oberen Fläche ihres Außenrands (93).

13. System nach Anspruch 11 oder 12 mit einem Adapter für einen Plattenteller (5), wobei der Adapter eine an dem Plattenteller (5) angepasste äußere Form hat, mit Ergreifungslöchern (32), einem inneren Sttitzbereich (33) zur Aufnahme einer optischen Platte (25) an der unteren Fläche ihres Außenrands, und einem äußeren Stützbereich der gestützt wird durch den Stützbereich (29) des Plattentellers (5), wobei die obere Fläche des inneren Stützbereichs (33) im Querschnitt von seinem radialen inneren Ende zu seinem radial äußeren Ende zunimmt, und mit einer öffnung (34) in dem Stützbereich (33) für einen Zugriff zu dem radial nach außen gerichteten Bereich einer Platte, wobei der Adapter asymmetrisch ist.

14. System mit einem Behälter (1) für optische Platten (25) nach einem der Ansprüche 1 bis 10 und einem Magazinspieler und/oder Recorder, wobei der Magazinspieler und/oder der Recorder eine optische Aufnahmeeinheit (40) enthält, einem Magazin-Plattenteller (42) für wenigstens einen Behälter. (1), wobei der Magazin-Plattenteller (42) eine Orientieruhgsrippe (53) und einen Schieber (55) enthält zur Bewegung eines einzigen Plattentellers (5) aus dem Behälter (1) in ein den Plattenteller aufnehmendes Teil (47) der optischen Aufnahmeeinheit (40), und der Schieber (55) und die optische Aufnahmeeinheit (40) eine einzige vertikal bewegbare Einheit bilden.

15. System nach Anspruch 14, **dadurch gekonnzeichnet, dass** es eine Schublade (41) zur Aufnahme einer einzelnen Platte (25) einer Cartridge (59) und einen Plattenteller (5) von einem Behälter (1) enthält.

16. System nach Anspruch 14 oder 15, **dadurch gekennzeichnet, dass** der Plattenteller-Aufnahmebereich (47) einen Platten-Freigabeweg (96) für die Betätigung eines Platten-Freigabepins (95) enthält.

## Revendications

1. Coffret à disques optiques comprenant au moins un tiroir coulissant(5), un dispositif de guidage (10) pour guider ledit tiroir (5),un couvercle (6) et une embase (2), **caractérisé en ce que** la somme des épaisseurs dudit couvercle (6) et de ladite embase (2) correspond à l'épaisseur dudit tiroir (5) de sorte que la distance entre l'un des deux tiroirs (5) est un multiple entier de l'épaisseur dudit tiroir (5) si deux coffrets (1) ou plus sont empilés.

2. Coffret selon la revendication 1, **caractérisé en ce qu'**il contient trois tiroirs (5).

3. Coffret selon l'une des revendications précédentes, **caractérisé en ce que** les dimensions extérieures du coffret (1) sont quasiment identiques à celles d'un boîtier standard ou d'un boîtier de rangement de DVD standard.

4. Coffret selon l'une des revendications précédentes, **caractérisé en ce qu'**il comporte un côté ouvert pour l'insertion et le retrait des tiroirs (5) et un côté opposé partiellement fermé.

5. Coffret selon l'une des revendications précédentes, **caractérisé en ce qu'**il comprend un dispositif de verrouillage amovible (21) pour le verrouillage de la position des tiroirs (5) dans le coffret (1).

6. Coffret selon l'une des revendications précédentes, **caractérisé en ce qu'**il comprend une encoche d'orientation (15).

7. Coffret selon l'une quelconque des précédentes revendications, **caractérisé en ce qu'**il comporte une zone d'identification (11).

8. Coffret selon l'une des revendications précédentes, **caractérisé en ce qu'**il comprend un dispositif de protection en lecture-écriture (14).

9. Coffret selon l'une quelconque des précédentes revendications, **caractérisé en ce qu'**il est, en vue de dessus, de forme rectangulaire, avec une première et une seconde ligne de base (D, W), la première ligne de base (D) étant plus courte que la seconde ligne (W), la première ligne de base (D) ayant une largeur supérieure de moins de 5 % par rapport au diamètre du disque optique le plus large (25) à stocker dans le coffret (1), la seconde ligne de base (w) ayant une largeur supérieure de moins de 20 % par rapport au diamètre du disque optique le plus large (25) à stocker dans le coffret (1), le coffret (1) comportant des parois latérales (3, 4) disposées au niveau des extrémités extérieures de la seconde ligne de base (W) et s'étendant dans la direction de la première ligne de base (D), le coffret (1) possédant des ouvertures disposées entre lesdites parois latérales (3, 4) et s'étendant le long de la seconde ligne de base (W), lesdites ouvertures étant fermées par les surfaces latérales des tiroirs (5) qui se trouvent dans le coffret (1), lesdites surfaces latérales desdits tiroirs (5), et les surfaces des parois (3, 4) et les surfaces d'extrémité de l'embase (2) et du couvercle (6) formant un plan quasiment plat.

10. Coffret selon l'une des revendications précédentes, **caractérisé en ce qu'**un premier dispositif de verrouillage (21) est disposé pour verrouiller et déverrouiller tous les tiroirs (5) stockés dans le coffret (1), et qu'un second dispositif de verrouillage (21) est fourni pour verrouiller et libérer chaque tiroir (5) indépendamment des autres tiroirs (5).

11. Système incluant un coffret (1) à disques optiques (25) selon l'une des revendications 1-10 et un tiroir (5), le tiroir (5) comprenant des encoches d'ancrage (27), des zones de support (29) pour maintenir un disque optique (25) au niveau de la surface inférieure de son bord extérieur, une ouverture dans ladite zone de support (29) pour permettre un accès à la zone radialement externe d'un disque optique (25), la surface supérieure de ladite zone de support (29) s'étendant, dans une vue en coupe transversale, de son extrémité radialement interne vers son extrémité radialement externe, un dispositif de guidage (9) pour guider le tiroir (5) dans le coffret (1) et un orifice d'orientation (28).

12. Système incluant un coffret (1) à disques optiques (25) selon l'une des revendications 1-10 et un tiroir (5), le tiroir (5) comprenant une zone de support (29), pour maintenir un disque optique (25) au niveau de la surface inférieure de son bord extérieur (93), et un support de disque amovible (91, 91', 91'', 108, 108') pour maintenir un disque optique (25) au niveau de la surface supérieure de son bord extérieur (93),

13. Système selon la revendication 11 ou 12, incluant en outre un adaptateur pour un tiroir (5), l'adaptateur présentant une forme extérieure qui s'adapte audit tiroir (5), des encoches d'ancrage (32), une zone de support intérieure (33) pour maintenir un disque optique (25) au niveau de la surface inférieure de son bord extérieur, et une zone de support extérieure pour être maintenue par une zone de support (29) dudit tiroir (5), ladite surface supérieure de ladite zone de support (33) s'étendant, dans une vue en coupe transversale, de son extrémité radialement interne vers son extrémité radialement externe, une ouverture (34) au niveau de ladite zone de support (33) permettant d'accéder à la zone radialement externe d'un disque, l'adaptateur étant asymétrique.

14. Système incluant un coffret (1) à disques optiques (25) selon l'une des revendications 1-10 et un lecteur et/ou enregistreur à chargeur, le lecteur et/ou enregistreur à chargeur comprenant une unité de phonocapteur laser (40), un tiroir à chargeur (42) pour contenir au moins un coffret (1), le tiroir à chargeur (42) comportant une encoche d'orientation (53), une glissière (55) permettant de retirer un tiroir (5) dudit coffret (1) et d'insérer ledit tiroir (5) dans une partie recevant le tiroir (47) de ladite unité de phonocapteur laser (40), ladite glissière (55) et ladite unité de phonocapteur laser (40) formant une seule unité amovible verticale.

15. Système selon la revendication 14, **caractérisé en ce qu'**il comprend un plateau (41) pour accueillir un ou plusieurs disques (25), une cartouche (59) et un tiroir (5) d'un coffret (1).

16. Système selon la revendication 14 ou 15, **caractérisé en ce que** ladite partie recevant le tiroir (47) comprend une bague de libération de disque (96) qui permet d'actionner une broche de libération de disque (95).
